# EUROPÄISCHE PATENTSCHRIFT

(11) **EP 0 930 199 B1**
(45) Veröffentlichungstag und Bekanntmachung des Hinweises auf die Patenterteilung: **17.03.2004**
(21) Anmeldenummer: 98123025.3
(22) Anmeldetag: 07.12.1998
(51) Int. Cl.: B60R 16/02

(54) **Elektrische Anlage mit abgesicherter Generatorleitung**
Electrical system with a secure alternator cable
Installation électrique avec un cable d'alternateur sécurisé

(30) Priorität: 15.01.1998 DE 19801207
(43) Veröffentlichungstag der Anmeldung: 21.07.1999
(73) Patentinhaber: Volkswagen Aktiengesellschaft, 38436 Wolfsburg (DE)
(72) Erfinder: Rennert, Ingo, 38539 Müden/Aller (DE); Breitlow-Hertzfeldt, Jürgen, 13055 Berlin (DE)
(74) Vertreter: Effert, Bressel und Kollegen

(56) Entgegenhaltungen:
- DE-A- 3 604 875
- DE-A- 4 435 726
- DE-C- 4 215 899

## Beschreibung

Die Erfindung betrifft eine elektrische Anlage mit abgesicherter Generatorleitung gemäß dem Oberbegriff des Patentanspruchs 1, wie aus der DE 36 04 875 A bekannt.

Elektrische Anlagen in Kraftfahrzeugen bestehen im allgemeinen aus diversen Haupt- und Nebenstromkreisen, wobei diese über Hin- und Rückleiter mit einer Batterie verbunden sind. Um den Verkabelungsaufwand gering zu halten, sind die Rückleiter einzeln oder in Gruppen mit der Karosserie des Fahrzeugs elektrisch leitend verbunden, so daß diese letztendlich als Rückleiter fungiert. Die Hauptstromkreise sind über Schmelzsicherungen - sogenannte Vorsicherungen - einzeln gegen Überstrom geschützt. Bekommt ein Kabel eines Hauptstromkreises beispielsweise durch Quetschung oder Durchscheuem Massekontakt, fließt ungewünscht ein Strom über die Karosserie ab. Hat dieser Strom eine bestimmte Größe, brennt ein Schmelzeinsatz der Vorsicherung durch. Dies ist aber abhängig von der Auslegung der Vorsicherungen. Es ist möglich, daß ungewollte Massekontakte vorhanden sind, ohne daß der Schmelzeinsatz durchbrennt. Es kann zur Funkenbildung kommen, was eine unerwünschte Gefahrenstelle, insbesondere bei Unfallsituationen, darstellt.

Die Kontaktierung der Rückleiter mit der Karosserie erfordert einigen Aufwand. Es werden Massebolzen mit Karosserieteilen verschweißt, an denen dann einzelne oder mehrere Rückleiter angeschlossen werden. Dabei muß eine elektrisch leitende Verbindung sicher gewährleistet sein, was durch Maßnahmen des Unterbodenschutzes oder der Lackierung oftmals erschwert ist.

Die Hin- und Rückleiter der bekannten elektrischen Anlagen bei Kraftfahrzeugen sind räumlich getrennt voneinander angeordnet. Sie sind bei Stromfluß mit elektromagnetischen Feldern umgeben, deren Ausbildung von der Größe und Richtung des Stromes abhängig ist.

Aus der DE 44 35 726 ist eine elektrische Anlage eines Kraftfahrzeuges bekannt, bestehend aus einer Batterie, einem Generator sowie aus einer Vielzahl elektrischer Verbraucher. Die Verbraucher sind in Haupt- und Nebenstromkreisen angeordnet und werden über Hin- und Rückleiter mit der Batterie verbunden, wobei sowohl die Hinleiter als auch die Rückleiter gegenüber der Karosserie des Kraftfahrzeuges isoliert verlegt sind. Zumindest ein Differenzstrommesser vergleicht den in zusammengehörenden Hin- und Rückleitem fließenden Strom. Dieser muß bei ordnungsgemäßem Betrieb in erster Näherung gleich groß sein. Ist dies nicht der Fall, muß Strom über einen nicht konstruktiv vorgesehenen Pfad abfließen, was einen Fehlzustand oder sogar eine Gefahr darstellt. Nachteilig an der bekannten elektrischen Anlage ist, daß die Schmelzsicherung zwischen Generator und Batterie im Hauptstromkreis nicht ersetzbar ist, da der Generator keine Rückleitung hat, sondern fest und leitend mit dem geerdeten Aggregat verbunden ist.

Aus der DE 36 04 875 A1 ist ein Verfahren zum Prüfen der elektrischen Ladeeinrichtung bekannt, insbesondere für Kraftfahrzeuge, die einen Generator und eine Batterie umfasst, wobei bei einer konstanten, zur Stromerzeugung ausreichenden Drehzahl des Generators die positive und/oder negative elektrische Verbindung vom Generator zur Batterie unter jeweiliger Messung des vom Generator zur Batterie fließenden Stromes wahlweise über die vorhandenen Stromwege oder über die vorhandenen Stromwege ersetzende oder parallel zu diesen verlaufende, zur Prüfung angebrachte Leitungen eines ausreichend groß dimensionierten, Spannungsabfälle vermeidenden Leitungsquerschnittes hergestellt wird. Durch die wechselnde Führung des Stromflusses vom Generator zur Batterie unter gleichzeitiger Strommessung lässt sich eindeutig feststellen, ob in den elektrischen Verbindungen zwischen Generator und Batterie Störungen vorliegen.

Der Erfindung liegt daher das technische Problem zugrunde, eine elektrische Anlage mit abgesicherter Generatorleitung zu schaffen, mit der schneller und genauer gefährliche Kurzschlüsse erkannt werden, insbesondere auch funkenbildende Kurzschlüsse unterhalb kritischer Schwellwerte, so daß der Generator entsprechend zurückgeregelt werden kann.

Die Lösung des technischen Problems ergibt sich durch die Merkmale des Patentanspruchs 1. Durch die zweigeteilte Ausbildung der Generatorleitung können mittels eines Differenzstrommessers minimale Beschädigungen oder Defekte an der Generatorleitung zuverlässig und schnell erkannt werden, da Beschädigungen oder Defekte, die sich zeitlich und kausal auf beide Generatorleitungen gleichmäßig auswirken könnten, sehr unwahrscheinlich sind. Dieses Differenzstromsignal kann dann einem Regler zugeführt werden, der den Generator entsprechend zurückregelt. Weitere vorteilhafte Ausgestaltungen der Erfindung ergeben sich aus den Unteransprüchen.

In einer bevorzugten Ausführungsform ist der Differenzstrommesser als Hallsensor ausgebildet, wodurch eine kompakte Bauweise bei gleichzeitig großer Meßgenauigkeit realisierbar ist. Dabei wird ausgenutzt, daß jeder stromdurchflossene Leiter von einem Magnetfeld umgeben ist. Besonders einfach läßt sich ein Differenzstrom zwischen den Generatorleitungen erfassen, wenn diese im Bereich des Hallsensors gegensinnig zueinander geführt werden, so daß sich die Magnetfelder teilweise exakt neutralisieren, solange die symmetrischen Generatorleitungen gleichmäßig belastet werden. Zur Verstärkung der effektiven magnetischen Feldstärke, die vom Hallsensor ausgewertet wird, werden die Generatorleitungen, die beispielsweise in Stanzgittertechnik hergestellt werden können, in diesem Bereich durch einen Ferritkern durchgeführt. Da gewisse Herstellungstoleranzen zwischen den Generatorleitungen und der anderen Bauelemente nicht zu vermeiden sind, wird dem Differenzstrommesser eine Kalibriereinrichtung zugeordnet, mittels derer bei der ersten Inbetriebnahme ein Nullabgleich vorgenommen werden kann. Eine weitere Möglichkeit , die Herstellungstoleranzen auszugleichen, besteht darin, dem Hallsensor einen Schwellwert zuzuordnen, so daß erst bei Überschreitung des Schwellwertes durch den Differenzstrom eine Abregelung stattfindet. Die Kalibriereinrichtung und die Zuordnung eines Schwellwertes können dabei einzeln oder in Kombination zur Anwendung kommen.

Die Erfindung wird nachfolgend anhand eines bevorzugten Ausführungsbeispiels näher erläutert. Die Fig. zeigen:
Fig. 1 ein Blockschaltbild einer elektrischen Anlage mit zweigeteilter Generatorleitung,
Fig. 2 eine Seitenansicht eines Differenzstrommessers mit als Rundkabel ausgebildeten Generatorleitungen und
Fig. 3 eine Seitenansicht eines Differenzstrommessers mit als Flachkabel oder in Stanzgittertechnik ausgebildeten Generatorleitungen.

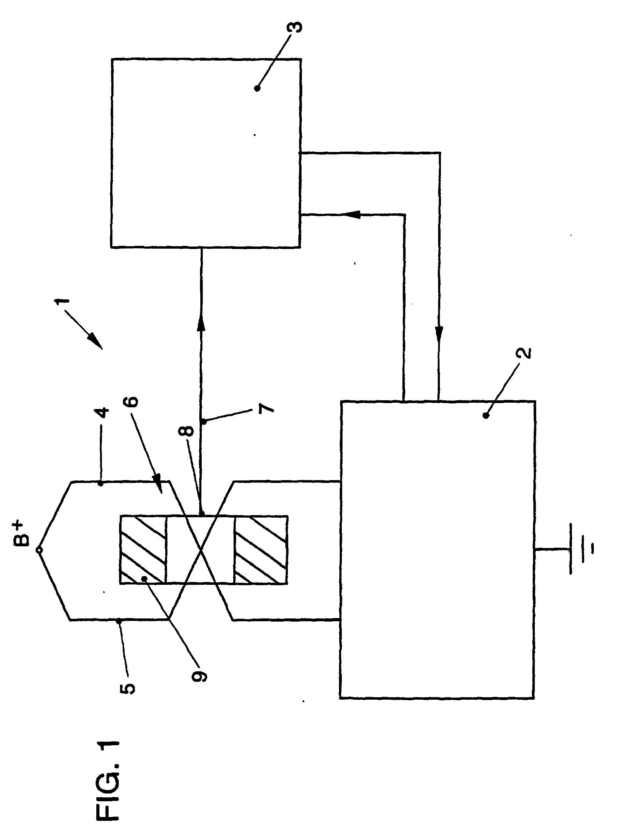

In der Fig. 1 ist ein stark vereinfachtes Blockschaltbild einer elektrischen Anlage 1 dargestellt. Die elektrische Anlage 1 umfaßt einen Generator 2, einen Regler 3, zwei Generatorleitungen 4, 5 und einen Differenzstrommesser 6. Der Generator 2 erzeugt eine Wechselspannung, die intem mittels bekannter Gleichrichterschaltungen in eine Gleichspannung umgesetzt wird. Diese Gleichspannung kann extem abgegriffen werden und über eine Generatorleitung 4, 5 beispielsweise mit dem Pluspol B+ einer Batterie verbunden werden. Über die Batterie können dann verschiedene elektrische Verbraucher in separaten Nebenstromkreisen mit elektrischer Energie versorgt werden. Die Generatorleitung 4, 5 ist symmetrisch zweigeteilt, d.h. anstelle der bisherigen einen Generatorleitung werden zwei separate Generatorleitungen 4, 5 verwendet, deren Abmessungen derart gewählt werden, daß die vorgegebenen Bedingungen bezüglich der maximalen Stromdichte eingehalten werden. Am Generator 2 und am Pluspol B+ der Batterie werden die beiden Generatorleitungen 4, 5 wieder zusammengefügt. Mittels des Differenzstrommessers 6 wird der Strom in den beiden Generatorleitungen 4, 5 miteinander verglichen und eine Fehlergröße 7 an den Regler 3 übergeben. Der Differenzstrommesser 6 ist als Hallsensor 8 mit Ferritkern 9 ausgebildet, durch den die Generatorleitungen 4, 5 gegensinnig durchgeführt werden. Dabei wird ausgenutzt, daß ein stromdurchflossener Leiter von einem konzentrischen Magnetfeld umgeben ist, dessen Feldstärke von der Stromstärke und dessen Orientierung von der Stromrichtung abhängig ist. Dadurch entsteht zwischen zwei Leitern, die parallel zueinander ausgebildet sind und von gleicher Stromstärke gegensinnig durchflossen werden, eine feldfreie Ebene.

Solange die beiden Generatorleitungen 4, 5 nicht beschädigt sind oder eine andere, einen Kurzschluß verursachende Störung auftritt, fließt durch beide Generatorleitungen 4, 5 der gleiche Strom, so daß der Differenzstrommesser 6 keine Fehlergröße 7 an den Regler 3 übergibt. Der Regler 3 regelt den Generator 2 im Arbeitsbereich derart, daß die Batterie optimal geladen wird, d.h. weder überladen noch entladen wird. Kommt nun beispielsweise ein geerdetes Teil in die Nähe der Generatorleitung 5, so könnte es zu einem funkenbildenden Kurzschluß kommen. Dies würde jedoch auch zu einem erhöhten Stromfluß in der Generatorleitung 5 im Vergleich zur Generatorleitung 4 führen, so daß der Differenzstrommesser eine Abweichung erfassen und eine Fehlergröße 7 an den Regler 3 übergeben würde. Der Regler 3 kann dann den Generator 2 abregeln oder aber auch falls notwendig völlig abschalten.

Da bereits geringe Abweichungen, beispielsweise bezüglich der Durchmesser der Generatorleitungen 4, 5 zu einem Differenzstrom führen, muß die Anordnung bei Inbetriebnahme abgeglichen werden. Dieser Abgleich kann direkt am Hallsensor 8 oder am Regler 3 vorgenommen werden. Eine andere Möglichkeit besteht darin, der Fehlergröße 7 einen Schwellwert zuzuordnen, der mögliche auftretende Toleranzen berücksichtigt, d.h. erst bei Überschreitung des Schwellwertes wird der Differenzstrom als Fehler oder Defekt aufgefaßt.

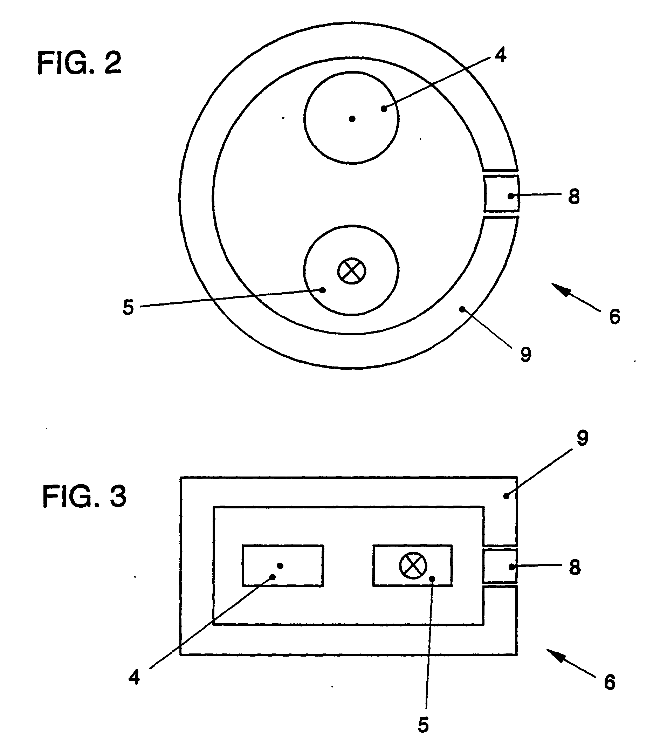

In der Fig. 2 ist eine Seitenansicht des Differenzstromsensors 6 dargestellt, bei der die Generatorleitungen 4 5 als Rundkabel ausgebildet sind. Der Hallsensor 8 ist zu den Generatorleitungen 4, 5 derart angeordnet, daß dieser sich im Bereich der sich neutralisierenden Felder befindet. In der Fig. 3 ist eine Ausführungsform mit als Streifenleitem ausgebildeten Generatorleitungen 4, 5 dargestellt. Diese können beispielsweise in der Stanzgittertechnik hergestellt werden oder als Flachkabel ausgebildet sein.

## Patentansprüche

1. Elektrische Anlage, umfassend einen Generator (2) und eine zweigeteilte Generatorleitung (4, 5), die den Generator (2) mit einer Batterie verbindet, sowie einen auf den Generator einwirkenden Regler (3), **dadurch gekennzeichnet, dass** auf der Generatorleitung (4, 5) eine als Differenzstrommesser (6) ausgebildete Kurzschlusserfassungseinrichtung angeordnet ist, die mit dem Regler (3) verbunden ist.

2. Elektrische Anlage nach Anspruch 1, **dadurch gekennzeichnet, dass** die zweigeteilte Generatorleitung (4, 5) symmetrisch ausgebildet ist.

3. Elektrische Anlage nach Anspruch 1 oder 2, **dadurch gekennzeichnet, dass** der Differenzstrommesser (6) als Hallsensor (8) ausgebildet ist.

4. Elektrische Anlage nach Anspruch 3, **dadurch gekennzeichnet, dass** die Generatorleitungen (4, 5) im Bereich des Hallsensors (8) gegensinnig zueinander geführt sind.

5. Elektrische Anlage nach Anspruch 3 oder 4, **dadurch gekennzeichnet, dass** dem Hallsensor (8) ein Ferrit-Kern (9) zugeordnet ist, durch den die Generatorleitungen (4, 5) gegensinnig geführt sind.

6. Elektrische Anlage nach einem der Ansprüche 3 bis 5, **dadurch gekennzeichnet, dass** eine dem Hallsensor (8) und/oder dem Regler (3) zugeordnete Kalibriereinrichtung vorgesehen ist, mittels derer der Hallsensor (8) bei Inbetriebnahme abgleichbar ist.

7. Elektrische Anlage nach einem der vorangehenden Ansprüche, **dadurch gekennzeichnet, dass** der Differenzstrommesser (6) geeignet ist, bei Überschreitung eines zugeordneten Schwellenwertes des Differenzstroms den auf den auf den Generator (2) einwirkenden Regler (3) anzusteuern.

## Claims

1. Electrical system, comprising a generator (2) and a two-part generator line (4, 5), which connects the generator (2) to a battery, as well as a regulator (3) which acts on the generator, **characterized in that** a short-circuit detection device, which is in the form of a residual current measuring device (6) and is connected to the regulator (3), is arranged on the generator line (4, 5).

2. Electrical system according to Claim 1, **characterized in that** the two-part generator line (4, 5) is balanced.

3. Electrical system according to Claim 1 or 2, **characterized in that** the residual current measuring device (6) is in the form of a Hall sensor (8).

4. Electrical system according to Claim 3, **characterized in that** the generator lines (4, 5) are routed in opposite senses to one another in the region of the Hall sensor (8).

5. Electrical system according to Claim 3 or 4, **characterized in that** the Hall sensor (8) has an associated ferrite core (9) through which the generator lines (4, 5) are routed in opposite senses.

6. Electrical system according to one of Claims 3 to 5, **characterized in that** a calibration device is provided which is associated with the Hall sensor (8) and/or regulator (3) and by means of which the Hall sensor (8) can be calibrated on first use.

7. Electrical system according to one of the preceding claims, **characterized in that** the residual current measuring device (6) is suitable for driving the regulator (3), which acts on the generator (2), when an associated threshold value for the residual current is exceeded.

## Revendications

1. Installation électrique comprenant un alternateur (2) et un câble d'alternateur divisé en deux (4, 5) qui relie l'alternateur (2) avec une batterie, ainsi qu'un régulateur (3) agissant sur l'alternateur, **caractérisée en ce qu'**un dispositif de détection de court-circuit réalisé sous la forme d'un dispositif de mesure du courant différentiel (6) auquel est relié le régulateur (6) est disposé sur le câble d'alternateur (4, 5).

2. Installation électrique selon la revendication 1, **caractérisée en ce que** le câble d'alternateur divisé en deux (4, 5) présente une configuration symétrique.

3. Installation électrique selon la revendication 1 ou 2, **caractérisée en ce que** le dispositif de mesure de courant différentiel (6) est réalisé sous la forme d'un capteur à effet Hall (8).

4. Installation électrique selon la revendication 3, **caractérisée en ce que** les câbles d'alternateur (4, 5) sont guidés en sens inverse l'un par rapport à l'autre dans la zone du capteur à effet Hall (8).

5. Installation électrique selon la revendication 3 ou 4, **caractérisée en ce qu'**au capteur à effet Hall (8) est associé un noyau en ferrite (9) à travers lequel les câbles d'alternateur (4, 5) sont guidés en sens inverse.

6. Installation électrique selon l'une des revendications 3 à 5, **caractérisée en ce qu'**il est prévu un dispositif de calibrage associé au capteur à effet Hall (8) et/ou au régulateur (3) à l'aide duquel le capteur à effet Hall (8) peut être équilibré lors de la mise en service.

7. Installation électrique selon l'une des revendications précédentes, **caractérisée en ce que** le dispositif de mesure du courant différentiel (6) est conçu pour commander le régulateur (3) agissant sur l'alternateur (2) en cas de dépassement d'une valeur de seuil affectée au courant différentiel.
